# EUROPÄISCHE PATENTSCHRIFT

(11) **EP 1 384 832 B1**
(45) Veröffentlichungstag und Bekanntmachung des Hinweises auf die Patenterteilung: **20.05.2009**
(21) Anmeldenummer: 03013918.2
(22) Anmeldetag: 20.06.2003
(51) Int. Cl.: E04B 2/74

(54) **Sichtschutzeinrichtung**
Privacy device
Dispositif de paravent

(30) Priorität: 22.07.2002 DE 20211079 U
(43) Veröffentlichungstag der Anmeldung: 28.01.2004
(60) Teilanmeldung: 08018439.3
(73) Patentinhaber: Müller-Peddinghaus, Reiner, Prof. Dr., 51467 Bergisch Gladbach (DE)
(72) Erfinder: Müller-Peddinghaus, Reiner, Prof. Dr., 51467 Bergisch Gladbach (DE)
(74) Vertreter: Kierdorf, Theodor

(56) Entgegenhaltungen:
- US-A- 4 134 439
- US-A- 4 715 072
- US-A- 4 774 792
- US-A- 5 722 477
- US-B1- 6 206 079

## Beschreibung

Die Erfindung betrifft eine Sichtschutzeinrichtung.

Sichtschutzeinrichtungen sind als feste Stellagen in Form von sogenannten Paravents oder spanischen Wänden für die Aufteilung von Innenräumen bekannt. Hauptsächlich dienen diese Wandschirme der Unterteilung von Großraumbüros und sind als schwere, auch schallschluckende Konstruktionen bekannt. Für den Außenbereich sind Sicht- oder Windschutzelemente als leichte Tuchkonstruktionen bekannt, wobei das Tuch zwischen mittels Schnüren und Erdankem abgespannten Zeltstangen aufgespannt wird. Solche leichten Sichtschutzeinrichtungen sind nur für den temporären Einsatz vorgesehen. Diese eignen sich nicht zur Installation auf Terrassen und Balkonen.

Aus der US-A-5,722,477 ist eine Sichtschutzeinrichtung nach dem Oberbegriff des Anspruchs 1 bekannt. Diese umfasst bespannte, schwenkbeweglich miteinander verbundene Flügel, deren Rahmen jeweils über schäkelartig ausgebildete Verbindungselemente zusammengefügt sind. Die Flügel sind untereinander mit Verbindungsklammern gehalten. Diese Verbindungsklammern sind jeweils mit Schnappaufnahmen versehen, wobei die Schnappaufnahmen so ausgebildet sind, dass eine verwindungssteife Verbindung der Flügel der Sichtschutzeinrichtung untereinander zumindest nicht derart möglich ist, dass die Sichtschutzeinrichtung dauerhaft im Freien aufgestellt werden kann. Die zuvor beschriebene Sichtschutzeinrichtung ist daher entweder als Spielzeug oder als Raumteiler für Innenräume geeignet.

Der Erfindung liegt daher die Aufgabe zugrunde, eine Sichtschutzeinrichtung zu schaffen, die verhältnismäßig leicht und einfach konstruiert ist, sich jedoch für die dauerhafte Montage auf Terrassen und Balkonen eignet.

Die Aufgabe wird gelöst mit den kennzeichnenden Merkmalen des Anspruchs 1.

Auf diese Art und Weise lässt sich eine leichte und zusammenfaltbare, verhältnismäßig stabile Anordnung von verschiedenen Sicht- und/oder Windschutzelementen zu einer Sichtschutzeinrichtung bewerkstelligen.

Eine solche Einrichtung gemäß der Erfindung kann zur Wandmontage oder auch zur Bodenaufstellung vorgesehen sein.

Die jeweils mit den Rahmenschenkeln der Flügel ein Scharnier bildenden Klammern ermöglichen das einfache Zusammenstecken verschiedener Rahmenflügel. Dadurch, dass die Klammern formschlüssig mit den Rahmenschenkeln der Flügel zusammenwirken, lässt sich eine einfache Ausrichtung der Flügel einer Sichtschutzeinrichtung zueinander erzielen.

Vorzugsweise bilden die Klammern jeweils zwei etwa C-förmig ausgebildete Aufnahmen für die Rahmenschenkel aus, die in montierter Lage diese umgreifen.

Dadurch, dass die Aufnahmen jeweils durch federelastisch ausgebildete Haltearme gebildet werden, lassen sich in einfacher Art und Weise mehrere Flügel der erfindungsgemäßen Sichtschutzeinrichtung zusammenklipsen.

Zweckmäßigerweise sind die Klammern einstückig aus Kunststoff ausgebildet.

Die Klammern können wenigstens im Bereich einer Aufnahme wenigstens eine Rastvertiefung aufweisen, die mit Rastvorsprüngen der Rahmenschenkel zusammenwirken, so dass die einzelnen Flügel der Sichtschutzeinrichtung in wenigstens einer vorgegebenen Winkelstellung zueinander festlegbar sind. Zusätzlich oder alternativ können die Klammern so ausgebildet sein, dass wenigstens eine Aufnahme mit Schwenkbegrenzungsanschlägen versehen ist, die mit den Rastvorsprüngen der Rahmenschenkel zusammenwirken.

Bei einer besonders bevorzugten Ausführungsform der erfindungsgemäßen Sichtschutzeinrichtung ist vorgesehen, dass an wenigstens einem Rahmenschenkel wenigstens eines Flügels jeweils zwei Rastvorsprünge auf gleicher Höhe jeweils diametral gegenüberliegend angeordnet sind. Auf diese Art und Weise lassen sich zumindest einige der Klammern in zwei um 90° zueinander versetzten Winkelstellungen bezüglich der Rahmenschenkel arretieren. Hierdurch ist es möglich, mehrere Flügel der Einrichtung nach Art einer Ziehharmonika mit zueinander fluchtenden Konturen zusammenzufalten sowie diese in einer Linie fluchtend zueinander angeordnet auszuziehen.

Die Rahmen der Flügel sind zweckmäßigerweise aus mehreren die Rahmenschenkel bildenden Rohren oder Stangen zusammengesteckt, vorzugsweise sind hierzu die einzelnen Element jeweils mit endseitig aufgeweiteten Muffenenden und jeweils mit endseitig verjüngten Steckenden versehen. Anstelle von Sicherungssplinten können die Rohrenden auch mittels Federknöpfen ineinander gesichert sein. Vorzugsweise sind die Rohrenden miteinander verschraubt, wobei die Schraubenköpfe und/oder Muttern jeweils als Rastelemente dienen können.

Die Rahmen können beispielsweise Eckelemente aufweisen, über welche die Rahmenschenkel zusammengefügt sind. Diese Eckelemente können beispielsweise als spritzgegossene Kunststoffbauteile ausgeführt sein.

An wenigstens einem Flügel können Klammern zur Wandbefestigung vorgesehen sein, die jeweils einen mit Befestigungsmitteln versehenen Sockel und eine etwa C-förmig ausgebildete, den Rahmenschenkel umschließende Aufnahme aufweisen. Über die Wandbefestigung lassen sich mehrere zueinander abwinkelbare Flügel verhältnismäßig einfach an einer Hauswand oder einer Terrassenbegrenzungswand montieren, und zwar so, dass die gesamte Anordnung an den dauerhaft an der Wand montierten Klammern verrastbar bzw. verklipsbar ist.

Auf die gleiche Art und Weise lassen sich an den Rahmenschenkeln diverse Anbauteile befestigen, beispielsweise Fußelemente oder Erdspieße.

Die Erfindung wird nachstehend anhand eines in den Zeichnungen dargestellten Ausführungsbeispiels erläutert.

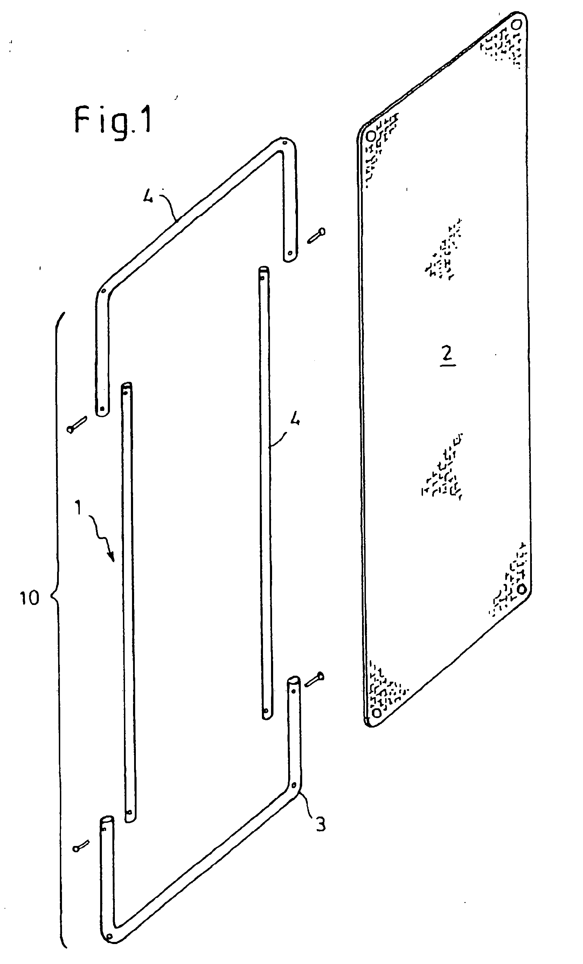

Es zeigen
- Figur 1: eine perspektivische Ansicht eines Flügels der Sichtschutzeinrichtung gemäß der Erfindung,
- Figur 2: eine Ansicht eines solchen Flügels, der mit Fußelementen versehen ist,
- Figur 3: eine vergrößerte Ansicht des in Figur 2 mit III gekennzeichneten Bereichs,
- Figur 4: eine Ansicht eines Fußelements,
- Figur 5: eine Draufsicht auf den in Figur 2 dargestellten Flügel,
- Figur 5a: eine Ansicht des als Klippfuß ausgebildeten Fußelements,
- Figur 5b: einen Schnitt durch das Standrohr des Klippfußes entlang der Linien B-B,
- Figur 5c: einen Schnitt durch das Standrohr des Klippfußes entlang der Linien C-C,
- Figur 6: eine Ansicht eines Erdspießes mit Aufnahme für den Rahmenschenkel eines Flügels,
- Figur 7: eine Ansicht, die die Verbindung mehrerer Flügel mittels als Verbindungsklipps ausgebildeten Haltern veranschaulicht,
- Figur 8: eine Draufsicht auf die in Figur 7 dargestellte Anordnung,

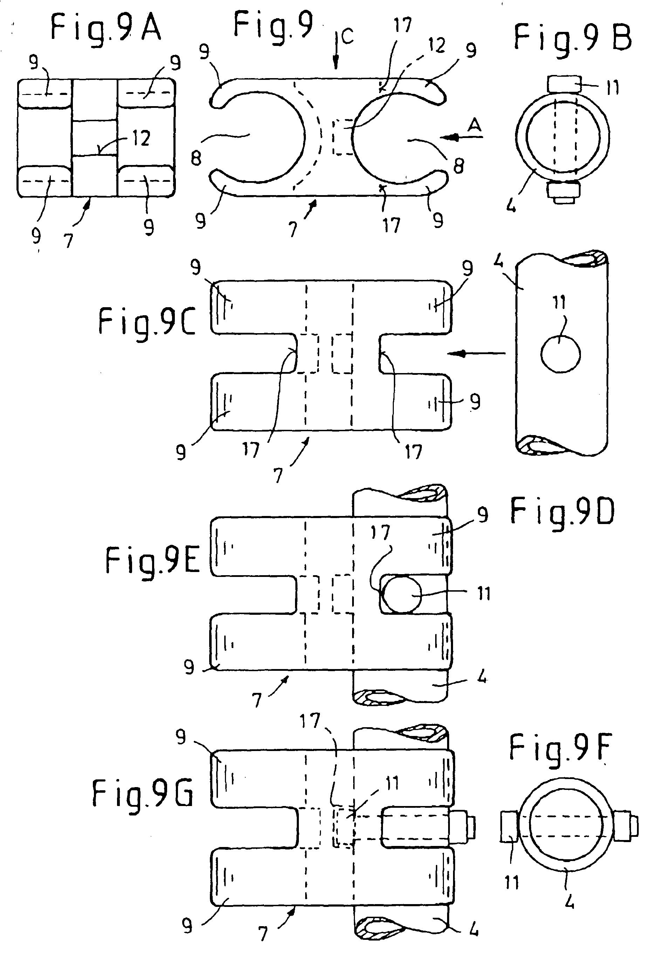

- Figur 9: eine schematische Darstellung eines Verbindungsklipps und dessen Verbindung mit dem Rahmenschenkel eines Flügels,
- Figur 9a: eine Ansicht des Verbindungsklipps in Richtung des in Figur 9 dargestellten Pfeils A
- Figur 9b: einen Schnitt durch das Rahmenrohr im Bereich der Rastvorsprünge, wobei die Lage des Rahmenrohrs in Bezug auf den in Figur 9c dargestellten Verbindungsklipp dargestellt ist,
- Figuren 9c 9f: schematische Darstellungen, die das Zusammenwirken von Verbindungsklipp und Rahmenschekel verdeutlichen,
- Figuren 10 und 11: eine Darstellung der Sichtschutzeinrichtung gemäß der Erfindung zur Wandmontage in ausgezogener und eingeklappter Stellung und
- Figur 12: eine Ansicht eines Flügels der Sichtschutzeinrichtung gemäß der Erfindung mit einem daran befestigten Sonnenschirm.

Wie ohne weiteres aus den Figuren ersichtlich ist, besteht die Sichtschutzeinrichtung gemäß der Erfindung im Wesentlichen aus mehreren schwenkbeweglich miteinander verbundenen Flügeln 1, die jeweils als mit einer Sichtschutzbespannung 2 versehene Rahmen 3 ausgebildet sind. Die Rahmen sind jeweils aus einzelnen, die Rahmenschenkel 10 bildenden Rohrabschnitten 4 zusammengesetzt. Die Rohrabschnitte 4 können unterschiedliche Durchmesser aufweisen, so dass deren Zusammensteckbarkeit gewährleistet ist, so wie dies in den Figuren dargestellt ist. Alternativ hierzu können die Enden wenigstens einiger Rohrabschnitte 4 jeweils endseitig muffenartig aufgeweitet sein, so dass die Rohrenden jeweils Aufnahmeenden und Steckenden bilden.

Die zu einem Rahmen 3 zusammengefügten Rohrabschnitte 4 sind jeweils im Bereich ihrer gegenseitigen Durchdringung mit Schrauben 5 verbunden. Die Ecken 6 des Rahmens 3 sind ebenfalls mit Befestigungsmitteln 6 zum Halten und Spannen der Sichtschutzbespannung 2 versehen. Die Befestigungsmittel 6 sind nur andeutungsweise dargestellt. Diese können in verschiedenster Art und Weise ausgeführt sein, beispielsweise als Schrauben, Bolzen, Spanndrähte oder dergleichen.

Wie vorstehend bereits erwähnt, können die Ecken des Rahmens auch als einstückig durch Spritzgießen hergestellte Eckelemente ausgebildet sein, die jeweils mit Aufnahmen für die Rohrabschnitte 4 versehen sind.

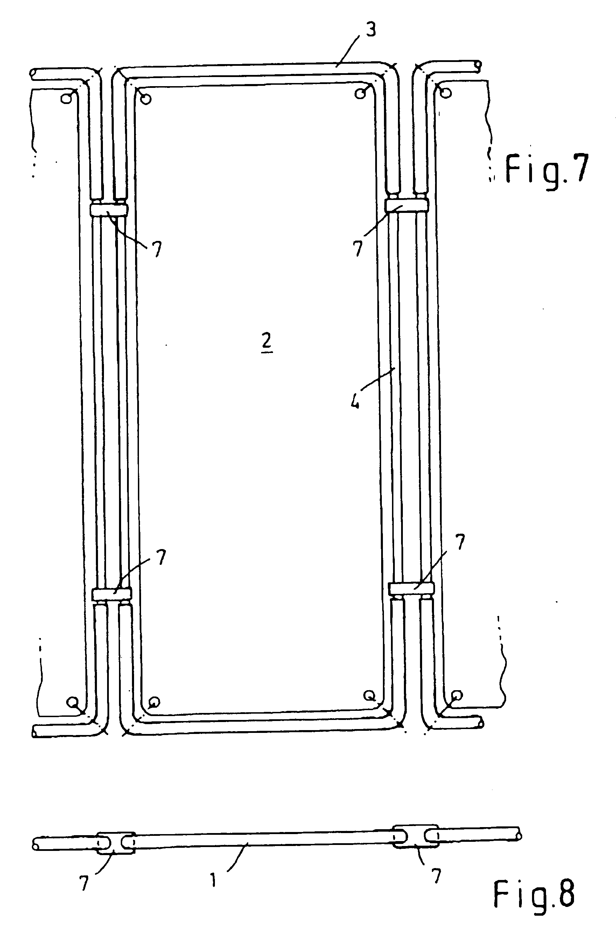

Wie insbesondere Figur 7 zu entnehmen ist, sind mehrere Flügel 1 der Sichtschutzeinrichtung untereinander mittels Scharniere bildenden als Verbindungsklipps 7 als Klammern schwenkbeweglich zueinander befestigt. Die Verbindungsklipps 7 sind aus Kunststoff ausgebildet und weisen zwei diametral gegenüberliegend angeordnete, etwa C-förmig ausgebildete Schnappaufnahmen 8 auf.

Die Schnappaufnahmen 8 werden jeweils durch vier federelastisch ausgebildete Haltearme 9 der Verbindungsklipps 7 gebildet. Die Federelastizität derselben ergibt sich aus den Eigenschaften und der Dickenverteilung des thermoplastischen Materials.

Wie Figur 7 zu entnehmen ist, ist der mittlere der drei dort dargestellten Flügel 1 der Sichtschutzeinrichtung jeweils beidseitig mit Verbindungsklipps 7 an einem benachbarten Flügel 1 befestigt. Die Verbindungsklipps 7 erlauben es, die Rahmenschenkel 10 benachbarter Rahmen 3 einfach miteinander zu verklipsen, wobei gleichzeitig die schwenkbewegliche Artikulation derselben gewährleistet ist. Dabei bildet jeweils ein Rahmenschenkel 10 eines Flügels 1 die Schwenkachse, um welche die Schwenkbewegung des benachbarten Flügels 1 vollzogen wird.

Damit die Schwenkachse jeweils eindeutig festliegt, ist jeweils ein Rahmenschenkel 10 in dem Verbindungsklipp 7 drehfest arretiert, und zwar durch Rastvorsprünge 11, die in entsprechende Rastvertiefungen 12 der Haltearme 9 eingreifen. Die Rastvorsprünge 11 können im einfachsten Fall durch die Köpfe von Zylinderschrauben gebildet werden, die durch den jeweiligen Rohrabschnitt 4 geführt sind.

Zwischen den Haltearmen 9 der Verbindungsklipps 7 sind jeweils Schwenkbegrenzungsanschläge 17 vorgesehen, die mit den jeweils in gleicher Höhe der Rahmenschenkel 10 diametral gegenüberliegend angeordneten Rastvorsprüngen 11 im Sinne einer Arretierung von Verbindungsklipp 7 und Rahmenschenkel 10 zueinander zusammenwirken. Hierzu wird der betreffende Verbindungsklipp 7 so auf den Rahmenschenkel 10 aufgeschnappt, dass die Köpfe der die Rohrabschnitte 4 verbindenden Zylinderschraube sich zwischen zwei übereinanderliegend angeordneten Haltearmen 9 einfügen und dort gegen die Schwenkbegrenzungsanschläge 17 anliegen. Hierdurch wird nicht nur eine radiale Festlegung von Verbindungsklipp 7 und Rahmenschenkel 10 zueinander bewirkt, sondern auch eine axiale Sicherung derselben.

Die Verbindungsklipps 7 sind jeweils im Bereich einer Schnappaufnahme 8, jedenfalls bei dem dargestellten Ausführungsbeispiel, mit einer Rastvertiefung 12 versehen, die jeweils im Tiefsten der C-förmig ausgebildeten Schnappaufnahme 8 angeordnet ist. Die Rastvertiefung 12 ist um 90° versetzt zu den gegenüberliegend angeordneten Schwenkbegrenzungsanschlägen 17 positioniert, so dass die Verbindungsklipps 7 in zwei um 90° Winkelabstand zueinander versetzt angeordneten Positionen festlegbar sind. Hierzu ist jeweils das Abnehmen des betreffenden Verbindungsklipps 7 von dem Rahmenschenkel 10 erforderlich.

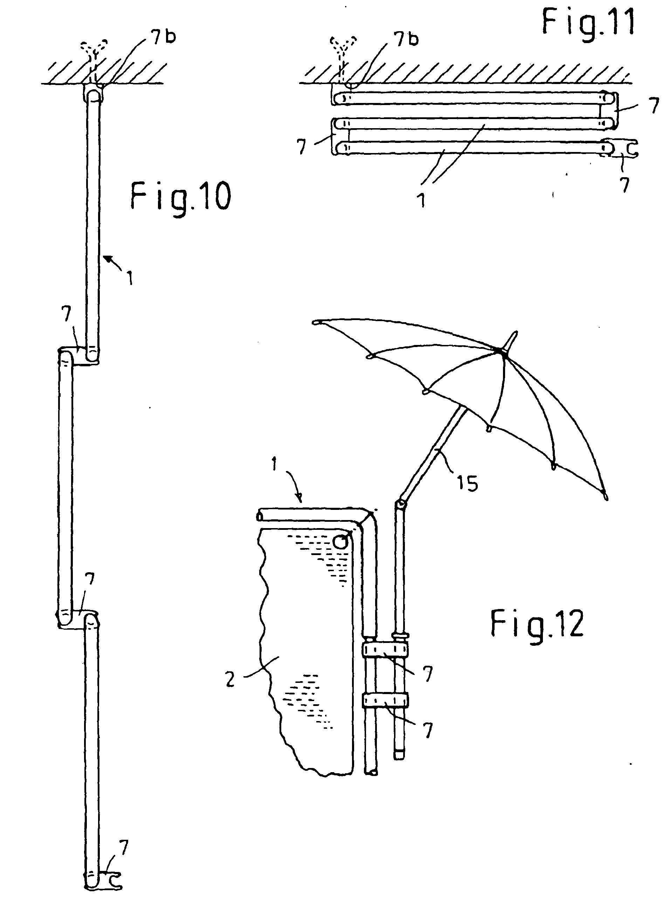

Die Rastvorsprünge 11 sind selbstverständlich in der dargestellten Konstellation auf einer Höhe des betreffenden Rahmenschenkels 10 angeordnet. Dies kann beispielsweise im Bereich einer ohnehin erforderlichen Verschraubung der Rohrabschnitte 4 miteinander sein. Hierdurch ist einerseits die Anordnung der Flügel 1 der Sichtschutzanordnung in einer Linie fluchtend zueinander möglich, andererseits kann ein Einfalten dieser in die in Figur 11 gezeigte Lage bewerkstelligt werden, derart, dass Flügel 1 mit ihrer Außenkontur deckungsgleich bzw. fluchtend aufeinanderliegen. Hierzu ist es erforderlich, die Verbindungsklipps 7 jeweils in einer um 90° versetzten Winkelstellung zu arretieren, wie dies in Figur 10 an dem von einer andeutungsweise dargestellten Wand 13 abliegenden Ende der Sichtschutzeinrichtung dargestellt ist.

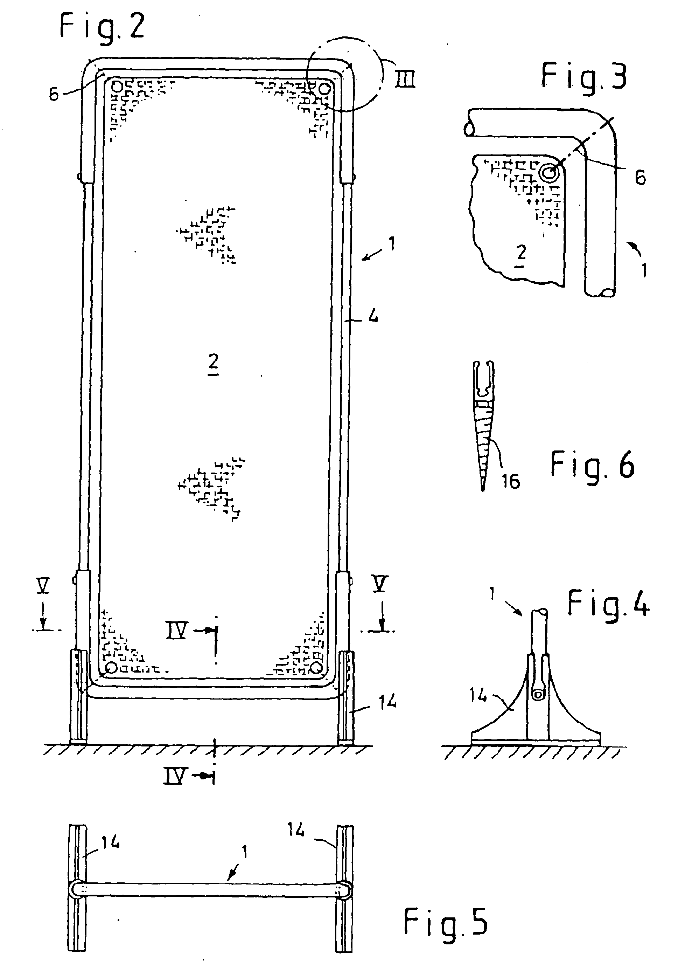

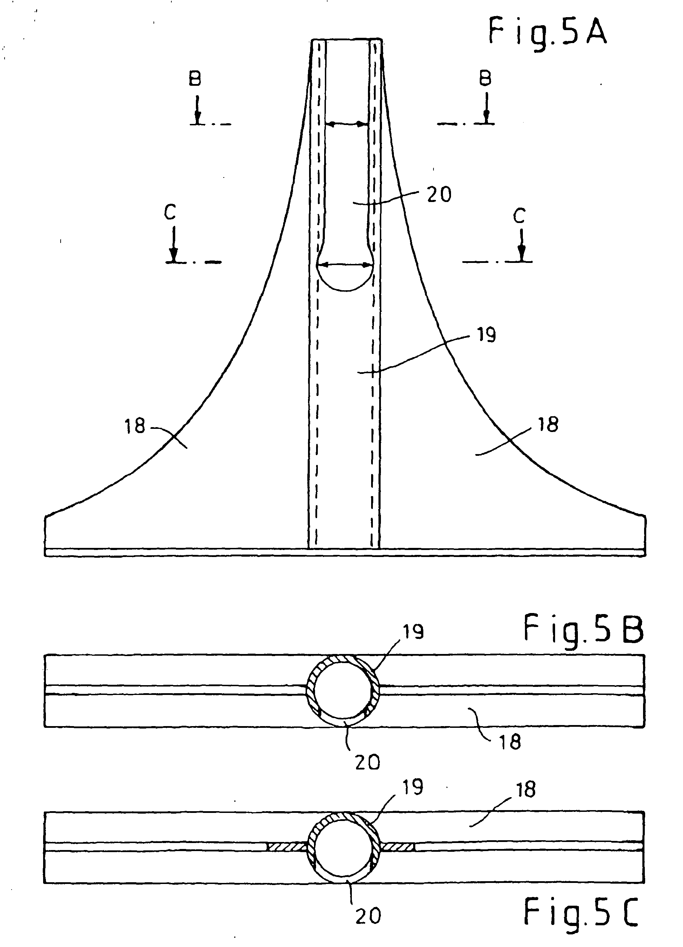

Es versteht sich von selbst, dass die Sichtschutzeinrichtung wahlweise zur Bodenbefestigung oder zur Wandbefestigung vorgesehen sein kann. Der in den Figuren 2 und 5 dargestellte Flügel 1 der Sichtschutzeinrichtung ist zur Bodenaufstellung mit zwei Klippfüßen 14 versehen. Die Klippfüße 14 sind ebenfalls mit einer Schnappaufnahme versehen, die so ausgebildet ist, dass diese jeweils an einem sich vertikal erstreckenden Rahmenschenkel 10 eines Flügels 1 seitlich befestigbar sind und den in aufgestellter Lage jeweils unteren, sich jeweils horizontal erstreckenden Rahmenschenkel 10 im Bereich einer Ecke stützend untergreifen. Die Klippfüße 14 sind hierzu als einteilige Kunststoffelemente mit einem Sockelbereich 18 und einem einteilig angeformten Standrohr 19 versehen. Das Standrohr 19 hat, die Schnappaufnahme bildend, ein etwa C-förmiges Querschnittsprofil, und zwar nur über eine Teillänge, die auf den jeweils vertikalen Rahmenschenkel 10 eines Rahmens 3 aufgeschnappt wird. Der sich in Längsrichtung des Standrohrs 19 erstreckende Aufnahmeschlitz 20 erweitert sich hierzu in Richtung auf den Sockelbereich 18 des Fußklipps 14. In diesem Bereich bildet der Aufnahmeschlitz 20 eine Art Sackloch, in dem die untere Rahmenecke oder der untere Rahmenschenkel 10 des Rahmens 3 aufliegt.

Zur Wandmontage der Sichtschutzeinrichtung sind Wandklipps 7b vorgesehen, die ebenfalls eine Schnappaufnahme 8 ausbilden und den betreffenden Rahmenschenkel des an der Wand 13 zu montierenden Flügels 1 umgreifen. Die Ausbildung der Wandklipps 7b ist etwa entsprechend der Ausbildung der Verbindungsklipps 7. Die Wandklipps 7b sind jeweils mit einem Sockel versehen, der mit einer Schraube durchsetzt gegen die Wand 13 verdübelt wird.

Durch die erfindungsgemäß vorgesehene Klipp-Technik lassen sich auch diverse Zubehör- und Umbauteile der Sichtschutzeinrichtung befestigen, wie es beispielsweise in Figur 12 dargestellt ist. Dort ist mittels zweier Verbindungsklipps 7 ein Sonnenschirm 15 an einem Rahmenschenkel 10 eines Flügels 1 befestigt. Mit 16 ist in Figur 6 ein Erdspieß mit Schnappaufnahme bezeichnet, der eine Aufstellung der Sichtschutzeinrichtung auf weichem Untergrund ermöglicht.

Insgesamt wird durch die Schnappverbindung der Anbauteile und der Flügel 1 untereinander der Aufbau eines leichten und modularen Systems ermöglicht.

### Bezugszeichenliste

- 1: Flügel
- 2: Sichtschutzbespannung
- 3: Rahmen
- 4: Rohrabschnitte
- 5: Schrauben
- 6: Befestigungsmittel
- 7: Verbindungsklipp
- 7b: Wandklipp
- 8: Schnappaufnahmen
- 9: Haltearme
- 10: Rahmenschenkel
- 11: Rastvorsprünge
- 12: Rastvertiefungen
- 13: Wand
- 14: Fußklipp
- 15: Sonnenschirm
- 16: Erdspieß
- 17: Schwenkbegrenzungsanschläge
- 18: Sockelbereich
- 19: Standrohr
- 20: Aufnahmeschlitz

## Patentansprüche

1. Sichtschutzeinrichtung, umfassend wenigstens zwei schwenkbeweglich miteinander verbundene Flügel (1), als jeweils mit Sichtschutzbespannung (2) versehene Rahmen (3), von denen zwei sich etwa parallel zueinander erstreckende Rahmenschenkel (10) benachbarter Flügel (1) über jeweils mit dem betreffenden Rahmenschenkel (10) ein Scharnier bildende Klammern (7) miteinander verbunden sind, **dadurch gekennzeichnet, dass** die Klammern (7) jeweils mit wenigstens einem Rahmenschenkel (10) in wenigstens einer Winkelstellung eine formschlüssige Arretierung bilden, derart, dass jeweils einer der zu verbindenden Rahmenschenkel (10) in der Klammer drehfest arretiert ist.

2. Einrichtung nach Anspruch 1, **dadurch gekennzeichnet, dass** die Klammern jeweils zwei etwa C-förmig ausgebildete Schnappaufnahmen (8) für die Rahmenschenkel (10) aufweisen, die in montierter Lage diese umgreifen.

3. Einrichtung nach Anspruch 1 oder 2, **dadurch gekennzeichnet, dass** die Schnappaufnahmen (8) jeweils durch federelastisch ausgebildete Halterarme (9) gebildet werden.

4. Einrichtung nach einem der Ansprüche 1 bis 3, **dadurch gekennzeichnet, dass** die Klammern einstückig aus Kunststoff ausgebildet sind.

5. Einrichtung nach Anspruch 3, **dadurch gekennzeichnet, dass** die Klammern wenigstens im Bereich einer Schnappaufnahme (8) mindestens eine Rastvertiefung (12) aufweisen, die mit Rastvorsprüngen (11) der Rahmenschenkel (10) zusammenwirken.

6. Einrichtung nach einem der Ansprüche 3 oder 5, **dadurch gekennzeichnet, dass** wenigstens eine Schnappaufnahme (8) mit Schwenkbegrenzungsanschlägen (17) versehen ist, die mit den Rastvorsprüngen (11) eines Rahmenschenkels (10) zusammenwirken.

7. Einrichtung nach Anspruch 5 oder 6, **dadurch gekennzeichnet, dass** an wenigsten einem Rahmenschenkel (10) wenigstens eines Flügels (1) jeweils zwei Rastvorsprünge (11) auf gleicher Höhe jeweils paarweise diametral gegenüberliegend angeordnet sind.

8. Einrichtung nach Anspruch 7, **dadurch gekennzeichnet, dass** die Rahmen (3) Eckelemente aufweisen, über welche die Rahmenschenkel (10) zusammengefügt sind.

9. Einrichtung nach einem der Ansprüche 1 bis 8, **dadurch gekennzeichnet, dass** die Rahmen (3) der Flügel (1) aus mehreren die Rahmenschenkel (10) bildenden Rohren oder Stangen zusammengesetzt sind.

10. Einrichtung nach einem der Ansprüche 1 bis 7, **dadurch gekennzeichnet, dass** an wenigstens einem Flügel (1) Klammern (7b) zur Wandbefestigung vorgesehen sind, die jeweils einen mit Befestigungsmitteln versehenen Sockel und eine etwa C-förmig ausgebildete, den Rahmenschenkel (10) umschließende Schnappaufnahme (8) aufweisen.

## Claims

1. Screen device, comprising at least two leaves (1) that are pivotably connected to one another, in the form of frames (3), which are provided in each case with screen covering (2) and of which two frame limbs (10) of adjacent leaves (1) that extend approximately parallel to one another are connected to one another by clamps (7), which in each case with the respective frame limb (10) form a hinge, **characterized in that** the clamps (7) in each case with at least one frame limb (10) in at least one angular position form a positive locking device, such that in each case one of the frame limbs (10) that are to be connected is locked in a rotationally fixed manner in the clamp.

2. Device according to claim 1, **characterized in that** the clamps comprise in each case two approximately C-shaped snap receivers (8) for the frame limbs (10) that engage in the assembled position around the frame limbs.

3. Device according to claim 1 or 2, **characterized in that** the snap receivers (8) are formed in each case by flexible retaining arms (9).

4. Device according to one of claims 1 to 3, **characterized in that** the clamps are formed integrally from plastics material.

5. Device according to claim 3, **characterized in that** the clamps at least in the region of a snap receiver (8) have at least one detent recess (12), which interact with detent projections (11) of the frame limbs (10).

6. Device according to one of claims 3 or 5, **characterized in that** at least one snap receiver (8) is provided with swivel-limiting stops (17) that interact with the detent projections (11) of a frame limb (10).

7. Device according to claim 5 or 6, **characterized in that** on at least one frame limb (10) of at least one leaf (1) in each case two detent projections (11) are disposed at the same height in each case pairwise diametrically opposite one another.

8. Device according to claim 7, **characterized in that** the frames (3) comprise corner elements, by means of which the frame limbs (10) are joined together.

9. Device according to one of claims 1 to 8, **characterized in that** the frames (3) of the leaves (1) are composed of a plurality of tubes or rods that form the frame limbs (10).

10. Device according to one of claims 1 to 7, **characterized in that** on at least one leaf (1) clamps (7b) for wall fastening are provided, which comprise in each case a base provided with fastening means as well as an approximately C-shaped snap receiver (8) that surrounds the frame limb (10).

## Revendications

1. Dispositif de protection visuelle comportant au moins deux battants (1) reliés l'un à l'autre à pivotement, comme des cadres (3) pourvus de revêtement de protection visuelle (2), dont deux branches de cadre (10) s'étendant à peu près parallèlement l'une à l'autre de battants (1) contigus sont reliées entre elles par respectivement des attaches (7) formant avec la branche de cadre (10) concernée une charnière, **caractérisé en ce que** les attaches (7) forment respectivement avec au moins une branche de cadre (10) dans au moins une position angulaire un blocage positif de sorte que respectivement l'une des branches de cadre (10) à relier soit bloquée en rotation dans l'attache.

2. Dispositif selon la revendication 1, **caractérisé en ce que** les attaches présentent respectivement deux logements à enclenchement (8) réalisés à peu près en forme de C pour les branches de cadre (10) qui entourent celles-ci dans la position montée.

3. Dispositif selon la revendication 1 ou 2, **caractérisé en ce que** les logements à enclenchement (8) sont formés respectivement par des bras de support (9) réalisés à élasticité de ressort.

4. Dispositif selon l'une quelconque des revendications 1 à 3, **caractérisé en ce que** les attaches sont réalisées d'un seul tenant en matière plastique.

5. Dispositif selon la revendication 3, **caractérisé en ce que** les attaches présentent au moins dans la zone d'un logement à enclenchement (8), au moins une cavité d'encliquetage (12) qui coopère avec des saillies d'encliquetage (11) des branches de cadre (10).

6. Dispositif selon l'une quelconque des revendications 3 ou 5, **caractérisé en ce qu'**au moins un logement à enclenchement (8) est pourvu de butées de limitation de pivotement (17) qui coopèrent avec les saillies d'encliquetage (11) d'une branche de cadre (10).

7. Dispositif selon la revendication 5 ou 6, **caractérisé en ce que** sur au moins une branche de cadre (10) d'au moins un battant (1) sont disposées respectivement deux saillies d'encliquetage (11) à la même hauteur respectivement par paires de manière diamétralement opposée.

8. Dispositif selon la revendication 7, **caractérisé en ce que** les cadres (3) présentent des éléments d'angle, par lesquels les branches de cadre (10) sont assemblées.

9. Dispositif selon l'une quelconque des revendications 1 à 8, **caractérisé en ce que** les cadres (3) des battants (1) sont composés de plusieurs tubes ou barres formant les branches de cadre (10).

10. Dispositif selon l'une quelconque des revendications 1 à 7, **caractérisé en ce que** sur au moins un battant (1), des attaches (7b) sont prévues pour la fixation sur la paroi, lesquelles présentent respectivement un socle pourvu de moyens de fixation et un logement à enclenchement (8) réalisé à peu près en forme de C, entourant la branche de cadre (10).
